Europäisches Patentamt

European Patent Office

Office européen des brevets

(19)

(11) Numéro de publication: **0 277 874 B1**

(12)

# FASCICULE DE BREVET EUROPEEN

(45) Date de publication de fascicule du brevet: **28.04.93**

(51) Int. Cl.5: **C08F 285/00**, C08L 51/04, C08L 57/04

(21) Numéro de dépôt: **88400189.2**

(22) Date de dépôt: **28.01.88**

(54) **Interpolymère composite, son procédé de préparation, et son application au renforcement de matrices thermoplastiques rigides.**

(30) Priorité: **30.01.87 FR 8701168**

(43) Date de publication de la demande:
**10.08.88 Bulletin 88/32**

(45) Mention de la délivrance du brevet:
**28.04.93 Bulletin 93/17**

(84) Etats contractants désignés:
**AT BE CH DE ES FR GB GR IT LI LU NL SE**

(56) Documents cités:
**EP-A- 0 096 412**
**EP-A- 0 110 123**
**FR-A- 2 084 780**

(73) Titulaire: **ELF ATOCHEM S.A.**
**4 & 8, Cours Michelet La Défense 10**
**F-92800 Puteaux(FR)**

(72) Inventeur: **Gaillard, Patrice**
**Chemin des Ecouloirs**
**F-62153 Souchez(FR)**
Inventeur: **Robinet, Jean Claude**
**99, rue Jean Biondi**
**F-620260 Lamorlaye(FR)**

(74) Mandataire: **Rochet, Michel et al**
**ELF ATOCHEM S.A. Département Propriété**
**Industrielle 4-8, Cours Michelet La Défense**
**10 - Cedex 42**
**F-92091 Paris-La-Défense (FR)**

EP 0 277 874 B1

**Description**

La présente invention se rapporte à un interpolymère composite multi-couches, à son procédé de préparation, et à l'application au renforcement de matrices thermoplastiques rigides.

Les polymères thermoplastiques rigides constituent une classe de composés bien connus, parmi lesquels on peut citer notamment les polymères acryliques, tels que le poly(méthacrylate de méthyle), ainsi que les polymères vinylaromatiques tels que le polystyrène.

Ces polymères thermoplastiques, du fait qu'ils sont rigides, sont susceptibles de se casser pendant les diverses phases de leur transformation, de même que pendant leur transport et leur utilisation.

On sait que de grandes quantités de matières élastomères peuvent être ajoutées à ces polymères thermoplastiques rigides pour améliorer leur résistance au choc.

Sont proposées, dans le brevet français n° 2 092 389 des compositions comprenant comme additif un interpolymère de morphologie mou-dur, dont la première phase élastomère de coeur est notamment un poly(acrylate d'alkyle) et dont la phase thermoplastique rigide finale (ou couche externe) est notamment un poly(méthacrylate d'alkyle).

Conformément au certificat d'addition français n° 2 159 822, on prévoit, comme additif renforçateur, un interpolymère de morphologie dur-mou-dur, dont le premier stade, non élastomère, est polymérisé à partir des monomères choisis parmi ceux utilisés pour constituer le polymère thermoplastique rigide de matrice, dont le stade élastomère intermédiaire est notamment un copolymère acrylate d'alkylestyrène, et dont le stade final est constitué des monomères formant le polymère thermoplastique rigide de matrice.

Le brevet FR-A-2.246.584 décrit une composition polymère, apte à la modification des propriétés de choc de polymères à teneur élevée en nitrile, comprenant :

A. un substrat caoutchouteux butadiène-styrène ayant une teneur en butadiène de 68 à 72% en poids et une teneur en styrène de 28 à 32% en poids, en se basant sur le poids total du substrat caoutchouteux de butadiène-styrène, et

B. une partie supérieure greffée sur le substrat caoutchouteux et comprenant :

(1) le produit de polymérisation d'une première composition de monomères comprenant :

(a) 0,1 à 2% en poids d'une dioléfine non conjuguée monomère,

(b) 0 à 30% en poids d'acrilonitrile,

(c) 40 à 60% en poids d'un hydrocarbure aromatique vinylidénique, et

(d) 20 à 50% en poids d'un ester alkylique d'acide acrylique ou méthacrylique où le groupe alkyle contient 1 à 8 atomes de carbones, et,

(2) une seconde conposition de monomères polymérisables comprenant 55 a 85% en poids d'acrylonitrile (le cas échéant en melange avec du méthacrylonitrile) et 15 & 45% en poids d'un hydrocarbure aromatique monovinylidénique monomère,

la partie supérieure greffée contenant au total au moins 40% en poids d'acrylonitrile ou de mélanges d'acrylonitrile et de méthacrylonitrile et le rapport entre la partie supérieure greffée (B) et le substrat caouthouteux (A) étant compris entre 0,15 et 2.

Le document FR-A-2 084 780 de Mitsubishi Rayon décrit une résine thermoplastique permettant de fabriquer des feuilles souples (de 50 $\mu$m d'épaisseur) ayant un aspect agréable, une excellente résistance aux intempéries et une résistance mécanique améliorée. La résine présente une structure à plusieurs couches formées de composant polymère acrylique, comprenant un coeur acrylique réticulé et une couche externe à base de méthacrylate d'alkyle.

Le document EP-A-0096412, pour obtenir des films thermoplastiques souples résistants aux intempéries et transparents, décrit des compositions comprenant un mélange de polymère I et II ayant une structure semblable à plusieurs couches acryliques dont la première (coeur) est formée en présence d'un agent de greffage et, éventuellement, d'un agent de réticulation, les deux polymères se différenciant par les proportions des couches.

Le document EP-A-110123 décrit une composition de résine thermoplastique pour former des films souples, non brillants et résistants aux intempéries pour être laminés sur d'autres substances. Elle comprend un polymère pour rendre non brillant et un polymère thermoplastique à plusieurs couches comprenant, comme coeur, un élastomère acrylique réticulé. Ces documents concernent la fabrication de films souples.

La présente invention concerne l'amélioration des propriétés, particulièrement de résistance au choc, de matrices thermoplastiques rigides, tout en conservant les bonnes propriétés optiques (transparence sur une large plage de températures, allant de -30°C à 100°C environ). Pour cela, la société déposante a découvert un additif de renforcement à ajouter à ces matrices thermoplastiques.

2

L'additif selon l'invention est constitué par un interpolymère produit séquentiellement avec les trois stades : élastomère non réticulé - élastomère réticulé - non élastomère, on pouvait atteindre, pour le produit fini résultant, des valeurs de résistance au choc et des qualités optiques particulièrement bonnes.

La présente invention a donc d'abord pour objet un interpolymère composite multi-couches caractérisé par :

A - un premier stade élastomère, relativement mou, ayant une température de transition vitreuse inférieure ou égale à 25°C, polymérisé, en l'absence de monomère de réticulation et de monomère de greffage, à partir d'un mélange de monomères comprenant, pour 100 parties en poids :

(a) de 50 à 100 parties en poids d'au moins un acrylate d'alkyle ou d'aralkyle; et,

(b) de 0 à 50 parties en poids d'au moins un autre monomère à insaturation éthylénique copolymérisable avec ledit acrylate,

B - un second stade élastomère, ayant en soi une température de transition vitreuse inférieure ou égale à 25°C, polymérisé en présence du produit du premier stade, à partir d'un mélange de monomères comprenant, pour 100 parties en poids :

(a) de 50 à 99,9 parties en poids d'au moins un monomère principal choisi parmi les diènes conjugués et les acrylates d'alkyle ou d'aralkyle;

(b) de 0 à 49,9 parties en poids d'au moins un monomère à insaturation monoéthylénique copolymérisable avec ledit monomère principal,

(C) de 0,05 à 8 parties en poids d'au moins un monomère de réticulation ; et

(D) de 0,05 à 6 parties en poids d'au moins un monomère de greffage : et,

C - un troisième stade non élastomère, relativement dur, ayant en soi une température de transition vitreuse supérieure à 25°C, polymérisé en présence des produits des premier et second stades, à partir d'un mélange de monomères comprenant, pour 100 parties en poids :

(a) de 85 à 99,9 parties en poids d'au moins un monomère principal choisi parmi les méthacrylates d'alkyle dont le groupe alkyle comporte de 1 à 4 atomes de carbone, et les hydrocarbures vinylaromatiques ;

(b) de 0,1 à 10 parties en poids d'au moins un monomère à insaturation monoéthlénique copolymérisable avec ledit monomère principal, et

(c) de 0 à 5 parties en poids d'au moins un agent limiteur de chaîne,

les stades (A), (B) et (C) représentant, pour 100 parties en poids dudit interpolymère, respectivement 3 à 80 parties en poids, 10 à 60 parties en poids, et 10 à 60 parties en poids.

Les monomères (c) utilisés pour la préparation du stade B représentent, de préférence, de 0,05 à 6 parties en poids pour 100 parties en poids du mélange total des monomères mis en oeuvre à ce stade ; de même, les monomères (d) utilisés pour la préparation du stade (B) représentent, de préférence, de 0,05 à 5 parties en poids pour 100 parties en poids du mélange total des monomères mis en oeuvre à ce stade.

Lorsque l'interpolymère selon l'invention se présente sous la forme de particules pulvérulentes, le diamètre de ces particules se situe avantageusement dans la plage allant de 40 à 500 nm, et, notamment, de 40 à 300 nm. Les particules qui composent ledit interpolymère comportent:

- un coeur relativement mou, constitué par le polymère du premier stade, de diamètre généralement compris entre 30 et 300 nm environ ;

- une couche intermédiaire, constituée par le polymère du second stade, d'épaisseur généralement comprise entre 3 et 80 nm environ, et

- une couche externe rigide, constituée par le polymère du troisième stade, d'épaisseur généralement compris entre 2 et 20nm environ.

Parmi les diènes conjugués entrant dans la définition de (a) du stade (B), on peut mentionner l'isoprène, le chloroprène, le diméthyl-2,3 budadiène et le butadiène-1,3. Parmi les acrylates d'alkyle entrant dans la définition de (a) des stades (A) et (B), on peut mentionner ceux qui présentent des groupes alkyle en $C_1$-$C_{15}$, avantageusement en $C_1$-$C_8$, et de préférence, en $C_2$-$C_8$. En particulier, on peut citer l'acrylate de n-butyle, l'acrylate d'éthyle, l'acrylate de 2-éthylhexyle et l'acrylate d'isobutyle. On pourrait également mettre en oeuvre des acrylates d'alkyle dont les groupes alkyle ont une chaîne plus longue. Parmi les acrylates d'aralkyle entrant dans la définition précitée, on peut citer ceux dans lesquels la partie cyclique contient 5, 6 ou 7 atomes de carbone, avec ou sans pont alkyle supplémentaire, et la partie alkyle contient jusqu'à 15 atomes de carbone. Cette liste des acrylates englobe également les acrylates substitués, tels que les acrylates d'alkylthioalkyle (par exemple, acrylate d'éthylthioéthyle) et les acrylates d'alcoxyalkyle (par exemple, acrylate de méthoxlyéthyle).

Comme monomère principal entrant dans la définition de (a) du stade (C), on peut mentionner le méthacrylate de méthyle, que l'on préfère, le méthacrylate d'éthyle, le méthacrylate d'isopropyle, le méthacrylate de n-butyle, le méthacrylate de sec-butyle, le méthacrylate de tert.-butyle, le styrène, l'α-

EP 0 277 874 B1

méthyl styrène, le monochlorostyrène, le tert.-butyl styrène, le vinyltoluène, etc.

Les monomères à insaturation monoéthylénique entrant dans la définition de (b) du stade (C) sont choisis parmi les monomères acryliques comme les acrylates d'alkyle sont le groupe alkyle a de 1 à 8 atomes de carbone, les acrylates d'alcoxy, l'acrylate de cyanéthyle, l'acrylonitrile, l'acrylamide, les acrylates d'hydroxyalkyle, les méthacrylates d'hydroxyalkyle, l'acide acrylique et l'acide méthacrylique. Les monomères à insaturation éthylénique entrant dans la définition de (b) du stade (A) et de (b) du stade (B) sont choisis parmi les méthacrylates d'alkyle dont le groupe alkyle a de 1 à 8 atomes de carbone, les acrylates d'alcoxy, l'acrylate de cyanéthyle, l'acrylonitrile, l'acrylamide, les acrylates d'hydroxyalkyle, les méthacrylique, ainsi que les hydrocarbures vinylaromatiques tels que le styrène, l'α-méthylstyrène, le vinyltoluène, etc.

Les monomères de réticulation, entrant dans la définition de (c) du stade (B), sont choisis, de préférence, parmi les polyméthacrylates et polyacrylates de polyols, comme les diméthacrylates d'alkylène-glycol, tels que le diméthacrylate d'éthylène-glycol, le diméthacrylate de 1,3-butylène-glycol, le diméthacrylate de 1,4-butylène-glycol et le diméthacrylate de propylène-glycol, les diacrylates d'alkylène-glycol, tels que le diacrylate d'éthylène-glycol, le diacrylate de 1,3- ou de 1,4-butylène-glycol, et le triméthacrylate de triméthylolpropane ; les polyvinylbenzènes, tels que le divinyl benzène ou le trivinyl benzène ; et l'acrylate et le méthacrylate de vinyle.

Les monomères de greffage, entrant dans la définition de (d) du stade (B), sont choisis notamment parmi les esters copolymérisables d'allyle, de méthallyle ou de crotyle d'acides ou diacides carboxyliques α,β-insaturés, comme les mono- et di-esters allyliques, méthallyliques et crotyliques de l'acide acrylique, de l'acide méthacrylique, de l'acide maléique, de l'acide fumarique et de l'acide itaconique ; l'éther d'allyle, l'éther de méthallyle et l'éther de crotyle et de vinyle ; le thioéther d'allyle, le thioéther de méthallyle et le thioéther de crotyle et de vinyle ; le N-allyl-, le méthallyl- ou le crotyl-maléimide ; les esters vinyliques de l'acide 3-buténoïque et de l'acide 4-penténoïque ; le cyanurate de triallyle ; le phosphonate de 0-allyle, de méthallyle ou de crotyl-O-alkyle, d'aryle, d'alkaryle ou d'aralkyl-P-vinyle, d'allyle ou de méthallyle; le phosphate de triallyle, de triméthallyle ou de tricrotyle; le phosphate de O-vinyle, de O,O-diallyle, de diméthallyle ou de dicrotyle ; les mono- et di- esters cycloalcényliques de l'acide acrylique, de l'acide méthacrylique, de l'acide maléique, de l'acide fumarique, de l'acide itaconique, tels que l'acrylate de 2-, 3- ou 4-cyclohexényle ; les mono- et di- esters bicyclo-(2,2,1)-hept-5-ène-2-yliques de l'acide acrylique, de l'acide méthacrylique, de l'acide maléique, de l'acide fumarique et de l'acide itaconique ; les éthers vinyliques et les thioéthers vinyliques des cycloalcénols et des cycloalcènethiols, tels que l'éther de vinyle et de cyclohex-4-ène-1-yle, l'éther vinylique de bicyclo-(2,2,1)-hept-5-ène-2-ol ; les esters vinyliques des acides cycloalcène-carboxyliques, tels que l'acide vinylcyclohex-3-ène-1-carboxylique et le bicyclo-(2,2,1)-hept-5-ène-2-carboxylate de vinyle.

Parmi les monomères de greffage, on préfère des composés contenant au moins un groupe allyle, en particulier les esters allyliques des acides à insaturation éthylénique. On préfère plus particulièrement l'acrylate d'allyle, le méthacrylate d'allyle, le maléate de diallyle, le fumarate de diallyle, l'itaconate de diallyle, le maléate acide d'allyle, le fumarate acide d'allyle et l'itaconate acide d'allyle. On utilise aussi avantageusement les esters diallyliques des acides polycarboxyliques qui ne contiennent pas d'insaturation polymérisable.

Les agents limiteurs de chaîne entrant le cas échéant dans la définition de (c) du stade (C) sont choisis notamment parmi les mercaptans, les polymercaptans, les composés polyhalogénés, les monoterpènes diinsaturés et les diterpènes monoinsaturés. On peut mentionner, plus particulièrement, le tertiododécylmercaptan, le sec.-butylmercaptan, le n-docécylmercaptan et le terpinolène.

Les interpolymères composites selon la présente invention peuvent se présenter notamment sous la forme d'un latex à une concentration de 20 à 50% en poids, de préférence de 30 à 40% en poids, dans l'eau, ou bien encore sous une forme pulvérulente obtenue à partir dudit latex.

La présente invention a également pour objet un procédé de préparation d'un interpolymère composite multi-couches tel que défini ci-dessus, caractérisé par le fait qu'il comprend les étapes consistent à :

- former le polymère du premier stade (A) par (co)polymérisation des monomères (a) et, le cas échéant, (b),
- ajouter le mélange des monomères correspondant au deuxième stade (B) et les (co)polymériser pour obtenir celui-ci ; et
- ajouter le mélange des monomères correspondant au troisième stade (C) et les (co)polymériser pour obtenir celui-ci,

chaque étape de polymérisation étant effectuée en émulsion, dans un milieu aqueux, en présence d'au moins un initiateur de radicaux libres et d'au moins un agent émulsifiant. Le produit obtenu à l'issue de ces trois étapes se présente sous forme de latex.

4

La proportion d'émulsifiant est, de préférence, inférieure à 1% en poids, notamment comprise entre 0,1 et 0,6% en poids, sur la base du poids total des monomères présents.

Comme agents émulsifiants utilisables, on trouve :

- des agents tensio-actifs anioniques comme les alkyl benzène-sulfonates alcalins, tels que le dodécyl-benzène-sulfonate de sodium, les alkyl-phénoxypolyéthylène-sulfonates alcalins, le lauryl-sulfate de sodium ou de potassium, des sels d'amines à longues chaînes et des sels d'acides carboxyliques et sulfoniques à longues chaînes ;
- des agents tensio-actifs non-ioniques, notamment ceux comportant des motifs oxazoline ; ceux comportant des motifs oxyde d'alkylène, par exemple, les agents tensioactifs alkylphénylpolyoxyéthylénés, les copolymères styrène-oxyde d'éthylène, les copolymères oxyde de propylène-oxyde d'éthylène et les esters d'alkyle polyoxyéthylénés ; les esters et éthers d'acides gras de sorbitan ou de sorbitol, plus particulièrement, l'hexaoléate de sorbitol polyoxyéthyléné, le sesquioléate de sorbitan, le trioléate de sorbitan et le monooléate de sorbitol polyoxyéthyléné ; et les esters ou éthers de cellulose ;
- les agents tensio-actifs cationiques, comme les sels d'onium (ammonium, phosphonium ou pyridinium) quaternaires avec un substituant hydrophobant tel qu'un reste alkyle à longue chaîne, par exemple les sels de triméthylalkylammonium, dont le groupe alkyle possède une chaîne longue d'au moins 8 atomes de carbone ; et les sels d'onium à substituant stériquement encombrant, tels que le bleu de méthylène et l'acétate de cyclohexylamine ;
- ou encore des mélanges de ces différents types d'agents tensio-actifs.

Le milieu de polymérisation contient, à chaque stade, une quantité efficace d'au moins un initiateur de radicaux libres, qui est activé soit par la chaleur, soit par une réaction d'oxydo-réduction (rédox). Les initiateurs utilisables sont, de préférence, choisis parmi les persulfates, les peroxydes, les hydroperoxydes et les composés diazoïques tels que, par exemple, l'azobisisobutyronitrile, le 2,2'-azobis-(2,4-diméthylvalé-ronitrile), le 1,1'-azobis-1-cyclohexanecarbonitrile, le perbenzoate de tertiobutyle, le peroxy-isopropylcarbonate de tertio-butyle, etc. Lorsqu'un persulfate est choisi en tant qu'initiateur, il peut être utilisé en combinaison avec au moins un réducter choisi parmi les polyhydrophénols, le sulfite et le bisulfite de sodium, le diméthylaminopropionitrile, les diazomercaptans et les ferricyanures.

Chaque polymérisation peut être conduite à des températures comprises entre 0 et 125°C, la gamme préférée allant de 30 à 95°C.

La quantité d'initiateur de radicaux libres et, le cas échéant, de réducteur utilisé, varie en fonction des monomères, de la température et du mode d'addition, mais, en règle générale, reste comprise entre environ 0,01 et 2% en poids, dans chaque stade de polymérisation, par rapport aux monomères présents.

On peut isoler l'interpolymère selon l'invention sous forme de poudre, à partir du latex le contenant, par toute technique connue de l'homme de l'art, telle que par coagulation ou par séchage par pulvérisation ou atomisation.

La présente invention porte également sur l'application de l'interpolymère tel que défini ci-dessus, au renforcement d'une matrice d'un polymère thermoplastique rigide d'au moins un monomère choisi parmi les méthacrylates d'alkyle, dont le groupe alkyle comprend de 1 à 4 atomes de carbone, et les hydrocarbures vinylaromatiques, ou d'un polymère de plus de 50% en poids d'au moins l'un de ces monomères et d'au moins un autre monomère copolymérisable à insaturation monoéthylénique. Dans cette application, la présente invention concerne une composition thermoplastique comprenant, pour 100 parties en poids :

- de 10 à 99 parties en poids, en particulier de 50 à 99 parties en poids, d'un polymère thermoplastique rigide d'au moins un monomère choisi parmi les méthacrylates d'alkyle, dont le groupe alkyle comprend de 1 à 4 atomes de carbone, et les hydrocarbures vinylaromatiques, ou d'un polymère de plus de 50% en poids d'au moins l'un de ces monomères et d'au moins un autre monomère copolymérisable à insaturation monoéthylénique ; et
- de 90 à 1 parties en poids, en particulier de 50 à 1 parties en poids, de l'interpolymère tel que défini ci-dessus.

Dans un mode de réalisation préféré, la combinaison des stades (A) et (B) de l'interpolymère présent dans la composition thermoplastique représente de 18 à 40 parties en poids, de préférence, de 24 à 32 parties en poids, de la composition thermoplastique totale. Etant donné que c'est la phase élastomère totale de l'interpolymère composite qui confère la résistance au choc, ledit interpolymère est ajouté à la matrice thermoplastique rigide pour avoir une proportion convenable de l'élastomère, en fonction des proportions indiquées et la phase rigide de l'interpolymère composite doit être considérée comme faisant partie de la totalité de la phase rigide pour déterminer les proportions de tels mélanges.

EP 0 277 874 B1

Le mélange de l'interpolymère composite et de la matrice thermoplastique rigide peut être effectué par n'importe quel procédé connu. On peut ainsi mélanger les deux composants se présentant tous deux sous la forme d'une poudre, afin de préparer une composition de moulage. On peut effectuer le mélange en mettant l'interpolymère en suspension dans le mélange des monomères ou dans le sirop de prépolymère devant conduire à la matrice thermoplastique rigide. On peut aussi placer l'interpolymère composite en émulsion, suspension et dispersion dans l'eau ou un composé organique, dans le mélange à couler devant conduire à la matrice, l'eau ou le composé organique étant éliminé avant ou après la formation, par coulée, de la matrice. L'interpolymère et la matrice thermoplastique rigide peuvent être mélangés tous deux à l'état d'émulsion, de suspension ou de solution dans un système aqueux on non aqueux, les particules étant isolées de l'eau ou du composé organique par coagulation, séchage par pulvérisation, ou par des moyens connus de séparation, et on peut ensuite les traiter avec ou sans étape intermédiaire de séchage. Les masses coulées que l'on peut obtenir peuvent ensuite être transformées en granules et les granules, traités dans une extrudeuse, ou un appareillage de moulage par injection. On peut aussi couler les mélanges en feuilles entre des plaques de verre ou des plaques métalliques, par des techniques connues, ce procédé étant préférable pour la préparation d'un matériau de vitrage.

Enfin, l'invention concerne des articles, façonnés, par exemple en feuilles (matériaux de vitrage, installations d'éclairage, enseignés et appareils de publicité lumineuse), ainsi que des articles moulés obtenus par coulée ou par injection à partir de la composition thermoplastique tell que définie ci-dessus.

On peut naturellement incorporer dans les interpolymères de l'invention et les matrices renforcées par de tels interpolmères, un certain nombre d'additifs usuels, selon des techniques bien connues des spécialistes, dans des proportions usuelles.

Aussi, on peut envisager d'incorporer des composés qui stabilisent les produits et empêchent une dégradation par oxydation, par la chaleur et par la lumière ultra-violette. Les stabilisants peuvent être introduits à une étape quelconque du procédé de polymérisation conduisant à la formation dudit interpolymère composite et/ou de la matrice, jusqu'au dernier stade de façonnage du produit final. On préfère cependant incorporer les stabilisans au cours des polymérisations ou dans les latex des polymères résultant de la polyméristion.

Les stabilisants vis-à-vis de la dégradation par oxydation ou par la chaleur, qui peuvent être utilisés ici , comprennent ceux utilisés généralement dans les produits de polymérisation par addition. On peut citer, à titre d'exemples, des phénols ayant un empêchement stérique, des hydroquinones, des phosphites, leurs dérivés et leurs combinaisons.

Les stabilisants vis-à-vis de la lumière ultraviolette peuvent également être ceux utilisés généralement pour les produits de polymérisation par addition. A titre d'exemples de tels stabilisants, on peut citer divers résorcinols substitués, salicylates, benzotriazoles, benzophénones, et leurs combinaisons.

D'autre substances pouvant être incorporées dans les interpolymères et matrices renforcées de la présente invention comprennent des lubrifiants comme l'acide stéarique, l'alcool stéarique et l'eicosanol ; des colorants comprenant des colorants organiques, comme le rouge d'anthraquinone, des pigments organiques et des vernis, comme le bleu de phtalocyanine, et des pigments minéraux, comme le bioxyde de titane et le sulfure de cadmium ; des charges et des diluants particulaires, comme le noir de carbone, la silice amorphe, l'amiante, les fibres de verre et le carbonate de magnésium ; des plastifiants, comme le phtalate de dioctyle, le phtalate de dibenzyle, le phtalate de butyl-benzyle et des huiles hydrocarbonées.

Dans les exemples suivants, donnés à titre illustratif, de l'invention, on a utilisé les abréviations suivantes :

MAM : méthacrylate de méthyle
AM : acrylate de butyle
ABu : acrylate de butyle
St : styrène
EDMA : diméthacrylate d'éthylène glycol
ALMeA : méthacrylate d'allyle
TDM : tert-dodécyl mercaptan

EXEMPLES 1 à 4

**I - Préparation des semences ou coeurs des interpolymères :**

On émulsifie dans l'eau une charge de monomère contenant 83 particles en poids d'acrylate de butyle et 17 parties en poids de styrène, en utilisant, comme émulsifiant, le lauryl sulfate de potassium. La charge des monomères est polymérisée en présence de persulfate de potassium à une température de 70°C, pendant 1 heure.

On obtient une semence dont le diamètre des particules est de 50 nm, et qui se présente sous la forme d'un latex en dilution dans l'eau.

**II - Formation de la couche intermédiaire élastomérique d'une épaisseur théorique de 15 nm :**

Dans un réacteur d'une capacité de 1,5 1, on introduit 602 g du latex obtenu à l'étape précédente, ce qui correspond à un poids de 60,75 g du polymère du stade (A) à l'état sec. On chauffe à 85°C et on introduit 0,564 g de persulfate de potassium dans 50 g d'eau. Ensuite, on charge les monomères du stade (B), soit ABu, St, EDMA et ALMeA, dans les quantitiés respectives indiquées dans le tableau ci-dessous. (Le rapport en poids ABu/St est de 83/17 pour chacun des exemples 1 à 4, et EDMA et ALMeA, sont introduits dans un pourcentage variable, également indiqué dans le tableau ci-après, par rapport à la charge totale des monomères introduits à ce stade). Le chargement des monomères s'effectue à raison de 1 g par minute dans le réacteur.

Le réacteur est agité à une vitesse de 350 à 500 tours par minute, toujours à la température de 85°C. Au bout de 30 minutes à 1 heure, le taux de conversion atteint est proche de 100%.

**III - Formation de la couche finale de compatibilisation d'un épaisseur théorique de 5,6 nm pour l'interpolymère des exemples 1 à 3 et de 3,87 nm pour l'interpolymère de l'exemple 4.**

On ajoute dans le réacteur 0,405 de persulfate de potassium dans 225 g d'eau. On ajoute ensuite le monomère du troisième stade (stade C) dans les quantitiés indiquées également dans le tableau, à un débit de 1,5 g de chaque monomère par minute.

Toujours en maintenant le réacteur à 85°C, on maintient l'agitation pendant 1 heure de cuisson. Le taux de conversion est alors proche de 100%.

On isole les polymères par séchage par pulvérisation.

**IV - Préparation des compositions thermoplastiques renforcées.**

Chacun des interpolymères obtenues est mélangé avec une matrice de poly(méthacrylate de méthyle) commercialisé par la Société "ALTULOR" sous la marque "ALTULITE® 2774", possédant un indice de fluidité de 1,5 dg/min, et se présentant sous forme de pastilles de poudre moulable, à raison de 40% en poids d'interpolymère pour 60% en poids de matrice. On transfère ces mélanges dans une extrudeuse à une température de fusion de 250°C et à une pression manométrique de la filière de $10^8$ Pa, pour obtenir une matière thermoplastique rigide translucide dont la teneur en élastomère est également indiquée dans le tableau ci-après.

A partir des quatre différents mélanges, on moule des éprouvettes par injection, dont on mesure la résistance au choc Izod non entaillé (à 23°C, sur des barreaux de 6,35 mm, selon la norme ISO-R-180). Les résultats obtenus sont rapportés dans le tableau ci-après.

## TABLEAU

| Exemple | Poids des monomères engagés pour couche élastomère réticulée (en g) | | | | Poids des monomères engagés pour couche de compatibilisation (en g) | | | Choc Izod non entaillé (J/m) | % en poids d'élastomère dans la composition finale |
|---|---|---|---|---|---|---|---|---|---|
| | ABu | St | EDMA | ALMeA | MAM | AM | TDM | | |
| 1 | 148,3 | 30,4 | 7,5 (4%) | 1,9 (1%) | 127,6 | 6,8 | 0,7 | 620 | 25,9 |
| 2 | 149,1 | 30,5 | 7,5 (4%) | 0,9 (0,5%) | 127,6 | 6,8 | 0,7 | 690 | 25,9 |
| 3 | 152,2 | 31,2 | 3,8 (2%) | 0,9 (0,5%) | 127,6 | 6,8 | 0,7 | 720 | 25,9 |
| 4 | 149,1 | 30,5 | 7,5 (4%) | 0,9 (0,5%) | 85,0 | 4,5 | 0,4 | 930 | 29,4 |

**Revendications**

1. Interpolymère composite multi-couches caractérisé par le fait qu'il comprend :

A - un premier stade élastomère relativement mou, ayant une température de transition vitreuse inférieure ou égale à 25°C, polymérisé, en l'absence de monomère de réticulation et de monomère de greffage, à partir d'un mélange de monomères comprenant, pour 100 parties en poids :

(a) de 50 à 100 parties en poids d'au moins un acrylate d'alkyle ou d'aralkyle ; et,

(b) de 0 à 50 parties en poids d'au moins un autre monomère à insaturation éthylénique çopolymérisable avec ledit acrylate, choisi parmi les méthacrylates d'alkyle dont le groupe alkyle a de 1 à 8 atomes de carbone, les acrylates d'alcoxy, l'acrylate de cyanéthyle, l'acrylonitrile, l'acrylamide, les acrylates d'hydroxyalkyle, les méthacrylates d'hydroxyalkyle, l'acide acrylique, l'acide methacrylique, ainsi que les hydrocarbures vinylaromatiques tels que le styrène, l'α-méthylstyrène, le vinyltoluène.

B - un second stade élastomère, ayant en soi une température de transition vitreuse inférieure ou égale à 25°C, polymérisé en présence du produit du premier stade, à partir d'un mélange de monomères comprenant, pour 100 parties en poids :

(a) de 50 à 99,9 parties en poids d'au moins un monomère principal choisi parmi les dienes conjugués et les acrylates d'alkyle ou d'aralkyle;

(b) de 0 à 49,9 parties en poids d'au moins un monomère à insaturation monoéthylénique copolymérisable avec ledit monomère principal, choisi parmi les méthacrylates d'alkyle dont le groupe alkyle a de 1 à 8 atomes de carbone, les acrylates d'alcoxy, l'acrylate de cyanéthyle, l'acrylonitrile, l'acrylamide, les acrylates d'hydroxyalkyle, les méthacrylates d'hydroxyalkyle, l'acide acrylique, l'acide methacrylique, ainsi que les hydrocarbures vinylaromatiques tels que le styrène, l'α-méthylstyrène, le vinyltoluène.

(c) de 0,05 à 8 parties en poids d'au moins un monomère de réticulation : et

(d) de 0,05 à 6 parties en poids d'au moins un monomère de greffage : et,

C - un troisième stade non élastomère, relativement dur, ayant en soi une température de transition vitreuse supérieure à 25°C, polymérisé en présence des produits des premier et second stades, à partir d'un mélange de monomères comprenant, pour 100 parties en poids :

(a) de 85 à 99,9 parties en poids d'au moins un monomère principal choisi parmi les méthacrylate d'alkyle dont le groupe alkyle comporte de 1 à 4 atomes de carbone, et les hydrocarbures vinylaromatiques,

(b) de 0,1 a 10 parties en poids d'au moins un monomère copolymérisable à insaturation monoéthylénique copolymérisable avec ledit monomère principal choisi parmi les monomères acryliques comme les acrylates d'alkyle dont le groupe alkyle a de 1 à 8 atomes de carbone, les acrylates d'alcoxy, l'acrylate de cyanéthyle, l'acrylonitrile, l'acrylamide, les acrylates d'hydroxyalkyle, les méthacrylates d'hydroxyalkyle, l'acide acrylique et l'acide méthacrylique

(c) de 0 à 5 parties en poids d'au moins un agent limiteur de chaîne,

les stades (A), (B) et (C) représentant, pour 100 parties en poids dudit interpolymère, respectivement 3 à 80 parties en poids, 10 à 60 parties en poids et 10 à 60 parties en poids.

2. Interpolymère selon la revendication 1, caractérisé par le fait que lasqu'il se présente sous la fort de particules pulvérulentes, le diamètre de ces particules se situe dans la plage allant de 40 à 500 nm.

3. Interpolymère selon l'une des revendications 1 et 2, caractérisé par le fait que le monomère de réticulation (c) du stade (B) est choisi parmi les polyméthacrylates et polyacrylates de polyols, les polyvinylbenzènes, et l'acrylate et le méthacrylate de vinyle.

4. Interpolymère selon l'une des revendications 1 à 3, caractérisé par le fait que le monomère de greffage (d) du stade (B) est choisi parmi les esters d'allyle, de méthallyle ou de crotyle d'acides ou diacides carboxyliques à insaturation α, β ; l'éther d'allyle, l'éther de méthallyle et l'éther de crotyle et de vinyle ; le thioéther d'allyle, le thioéther de méthallyle et le thioéther de crotyl et de vinyle ; le N-allyl-, le méthalllyl- ou le crotyl-maléimide ; les esters vinyliques de l'acide 3-buténoïque et de l'acide 4-penténoïque ; le cyanurate de triallyle ; le phosphonate de 0-allyle, de méthallyle ou de crotyl-O-alkyle, d'aryle, d'alkaryle ou d'aralkyl-P-vinyle, d'alyle ou de méthallyle ; le phosphate de triallyle, de triméthallyle ou de tricrotyle; le phosphate de O-vinyle, de O,O-diallyle, de diméthallyle ou de dicrotyle ; les esters cycloalcényliques de l'acide acrylique, de l'acide méthacrylique, de l'acide maléique, de l'acide fumarique, de l'acide itaconique ; les esters bicyclo-(2,2,1)-hept-5-ène-2-yliques de l'acide acrylique, de l'acide méthacrylique, de l'acide maléique, de l'acide fumarique et de l'acide itaconique ; les éthers vinyliques et les thio-éthers vinyliques des cycloalcénols et des cycloalcène-thiols ; et les esters vinyliques des acides cycloalcène-carboxyliques.

5. Interpolymère selon l'une des revendications 1 à 4, caractérisé par le fait que les agents limiteurs de chaîne (c) du stade (C) sont choisis parmi les mercaptans, les polymercaptans, les composés polyhalogénés, les monoterpènes diinsatués et les diterpènes monoinsaturés.

6. Interpolymère composite selon l'une des revendications 1 à 5, caractérisé par le fait qu'il se présente sous la forme d'un latex d'une concentration de 20 à 50% en poids dans l'eau.

7. Interpolymère composite selon l'une des revendications 1 à 5, caractérisé par le fait qu'il se présente sous la forme d'une poudre.

8. Procédé de préparation d'un interpolymère multi-couches tel qu défini à l'une des revendications 1 à 6, caractérisé par le fait qu'il comprend les étapes consistant à :
- former le polymère du premier stade (A) par (co)polymérisation des monomères (a) et, le cas échéant, (b),
- ajouter le mélange des monomères correspondant au deuxième stade (B) et les (co)polymériser pour obtenir celui-ci ; et

- ajouter le mélange des monomères correspondant au troisième stade (C) et les (co)polymériser pour obtenir celui-ci,

chaque étape de polymérisation étant effectuée en émulsion, dans un milieu aqueux, en présence d'un initiateur de radicaux libres et d'un agent émulsifiant, le produit obtenu à l'issue de ces trois étapes se présentant sous la forme de latex.

9. Composition thermoplastique consistant en un mélange comprenant, pour 100 parties en poids :
   - de 10 à 99 parties en poids d'un polymère thermoplastique rigide d'au moins un monomère choisi parmi les méthacrylates d'alkyle, dont le groupe alkyle comprend de 1 à 4 atomes de carbone, et les hydrocarbures vinylaromatiques ou d'un polymère de plus de 50% en poids d'au moins l'un de ces monomères et d'au moins un autre monomère copolymérisable à insaturation monoéthylénique ; et
   - de 90 à 1 parties en poids de l'interpolymère tel que défini à l'une des revendications 1 à 7.

10. Composition thermoplastique selon la revendication 9, caractérisée par le fait que la combinaison des stades (A) et (B) de l'interpolymère représente de 18 à 40% en poids de la composition thermoplastique totàle.

11. Tout article façonné obtenu au moyen de la composition thermoplastique telle que définie à l'une des revendications 9 et 10.

## Claims

1. Multilayer composite interpolymer characterised in that it comprises:

   A - a first relatively soft elastomeric stage which has a glass transition temperature lower than or equal to 25°C, polymerised, in the absence of any crosslinking or grafting monomer, by starting with a mixture of monomers comprising, per 100 parts by weight:

   (a) from 50 to 100 parts by weight of at least one alkyl or aralkyl acrylate; and,

   (b) from 0 to 50 parts by weight of at least one other monomer containing ethylenic unsaturation copolymerisable with the said acrylate, chosen from alkyl methacrylates in which the alkyl group contains from 1 to 8 carbon atoms, alkoxy acrylates, cyanoethyl acrylate, acrylonitrile, acrylamide, hydroxyalkyl acrylates, hydroxyalkyl methacrylates, acrylic acid, methacrylic acid, as well as vinylaromatic hydrocarbons such as styrene, $\alpha$-methylstyrene and vinyltoluene,

   B - a second elastomeric stage which in itself has a glass transition temperature lower than or equal to 25°C, polymerised in the presence of the product of the first stage by starting with a mixture of monomers comprising, per 100 parts by weight:

   (a) from 50 to 99.9 parts by weight of at least one main monomer chosen from conjugated dienes and alkyl or aralkyl acrylates;

   (b) from 0 to 49.9 parts by weight of at least one monomer containing monoethylenic unsaturation copolymerisable with the said main monomer, chosen from alkyl methacrylates in which the alkyl group contains from 1 to 8 carbon atoms, alkoxy acrylates, cyanoethyl acrylate, acrylonitrile, acrylamide, hydroxyalkyl acrylates, hydroxyalkyl methacrylates, acrylic acid, methacrylic acid, as well as vinylaromatic hydrocarbons such as styrene, $\alpha$-methylstyrene and vinyl toluene,

   (c) from 0.05 to 8 parts by weight of at least one crosslinking monomer; and

   (d) from 0.05 to 6 parts by weight of at least one grafting monomer; and,

   C - a third, relatively hard, nonelastomeric stage which in itself has a glass transition temperature higher than 25°C, polymerised in the presence of the products of the first and the second stages by starting with a mixture of monomers comprising, per 100 parts by weight:

   (a) from 85 to 99.9 parts by weight of at least one main monomer chosen from alkyl methacrylates in which the alkyl group contains from 1 to 4 carbon atoms, and vinylaromatic hydrocarbons,

   (b) from 0.1 to 10 parts by weight of at least one copolymerisable monomer containing monoethylenic unsaturation copolymerisable with the said main monomer chosen from acrylic monomers such as alkyl acrylates in which the alkyl group contains from 1 to 8 carbon atoms, alkoxy acrylates, cyanoethyl acrylate, acrylonitrile, acrylamide, hydroxyalkyl acrylates, hydroxyalkyl methacrylates, acrylic acid and methacrylic acid

   (c) from 0 to 5 parts by weight of at least one chain limiter agent,

   the stages (A), (B) and (C) representing, per 100 parts by weight of the said interpolymer, 3 to 80 parts by weight, 10 to 60 parts by weight and 10 to 60 parts by weight respectively.

2. Interpolymer according to Claim 1, characterised in that when it is in the form of pulverulent particles, the diameter of these particles lies in the range from 40 to 500 nm.

3. Interpolymer according to either of Claims 1 and 2, characterised in that the crosslinking monomer (c) of stage (B) is chosen from polyol polymethacrylates and polyacrylates, polyvinylbenzenes and vinyl acrylate and methacrylate.

4. Interpolymer according to one of Claims 1 to 3, characterised in that the grafting monomer (d) of stage (B) is chosen from allyl, methallyl or crotyl esters of carboxylic acids or diacids containing $\alpha,\beta$ unsaturation, allyl ether, methallyl ether and crotyl vinyl ether, allyl thioether, methallyl thioether and crotyl vinyl thioether; N-allyl-, methallyl- or crotylmaleimide, vinyl esters of 3-butenoic acid and of 4-pentenoic acid, triallyl cyanurate, O-allyl, methallyl or crotyl O-alkyl, aryl, alkaryl or aralkyl P-vinyl, allyl or methallyl phosphonate, triallyl, trimethallyl or tricrotyl phosphate; O-vinyl, O,O-diallyl, dimethallyl or dicrotyl phosphate, cycloalkenyl esters of acrylic acid, of methacrylic acid, of maleic acid, of fumaric acid, of itaconic acid, bicyclo[2.2.1]hept-5-en-2-yl esters of acrylic acid, of methacrylic acid, of maleic acid, of fumaric acid and of itaconic acid, vinyl ethers and vinyl thioethers of cycloalkenols and of cycloalkene thiols and vinyl esters of cycloalkene carboxylic acids.

5. Interpolymer according to one of Claims 1 to 4, characterised in that the chain limiter agents (c) of stage (C) are chosen from mercaptans, polymercaptans, polyhalogenated compounds, diunsaturated monoterpenes and monounsaturated diterpenes.

6. Composite interpolymer according to one of Claims 1 to 5, characterised in that it is in the form of a latex with a concentration of 20 to 50 % by weight in water.

7. Composite interpolymer according to one of Claims 1 to 5, characterised in that it is in the form of a powder.

8. Process for the preparation of a multilayer interpolymer as defined in one of Claims 1 to 6, characterised in that it comprises the stages consisting in:
   - forming the polymer of the first stage (A) by (co)polymerisation of the monomers (a) and, if appropriate, (b),
   - adding the mixture of the monomers corresponding to the second stage (B) and (co)polymerising them to obtain the latter; and
   - adding the mixture of the monomers corresponding to the third stage (C) and (co)polymerising them to obtain the latter,
   each polymerisation stage being performed in emulsion, in an aqueous medium, in the presence of a free-radical initiator and of an emulsifying agent, the product obtained at the end of these three stages being in latex form.

9. Thermoplastic composition consisting of a mixture comprising, per 100 parts by weight:
   - from 10 to 99 parts by weight of a rigid thermoplastic polymer of at least one monomer chosen from alkyl methacrylates in which the alkyl group contains from 1 to 4 carbon atoms, and vinylaromatic hydrocarbons or of a polymer of more than 50 % by weight of at least one of these monomers and of at least one other copolymerisable monomer containing monoethylenic unsaturation; and
   - from 90 to 1 parts by weight of the interpolymer as defined in one of Claims 1 to 7.

10. Thermoplastic composition according to Claim 9, characterised in that the combination of the stages (A) and (B) of the interpolymer represents from 18 to 40 % by weight of the total thermoplastic composition.

11. Any shaped article obtained by means of the thermoplastic composition as defined in either of Claims 9 and 10.

**Patentansprüche**

1. Polymerverbundwerkstoff, dadurch gekennzeichnet, daß er besteht aus:
   A - einem ersten, relativ weichen, elastomeren Bereich mit einer Glasübergangstemperatur von kleiner oder gleich 25° C, der, in Abwesenheit eines vernetzenden Monomeren und eines Pfropfmonomeren, ausgehend von einer Monomerenmischung polymerisiert wurde, die auf 100 Gewichtsteile enthält:
   a) 50 bis 100 Gewichtsteile wenigstens eines Alkyl- oder Aralkylacrylats und
   b) 0 bis 50 Gewichtsteile wenigstens eines anderen ethylenisch ungesättigten Monomeren, welches mit dem genannten Acrylat copolymerisierbar ist, ausgewählt aus Alkylmethacrylaten, deren Alkylgruppen 1 bis 8 Kohlenstoffatome besitzen, Alkoxyacrylaten, Cyanoethylacrylaten, Acrylnitril, Acrylamid, Hydroxyalkylacrylaten, Hydroxyalkylmethacrylaten, Acrylsäure, Methacrylsäure sowie vinylaromatischen Kohlenwasserstoffen wie Styrol, alpha-Methylstyrol, Vinyltoluol
   B - einem zweiten elastomeren Bereich mit einer Glasübergangstemperatur von kleiner oder gleich 25°C, der in Gegenwart des Produkts der ersten Phase polymerisiert wurde, ausgehend von einer Monomerenmischung, die auf 100 Gewichtsteile enthält:
   a) 50 bis 99,9 Gewichtsteile wenigstens eines Hauptmonomeren, ausgewählt aus konjugierten Dienen und Alkyl- oder Aralkylacrylaten,
   b) 0 bis 49,9 Gewichtsteile wenigstens eines monoethylenisch ungesättigten Monomeren, das mit dem genannten Hauptmonomeren copolymerisierbar ist, ausgewählt aus Alkylmethacrylaten, deren Alkylgruppen 1 bis 8 Kohlenstoffatome besitzen, Alkoxyacrylaten, Cyanoethylacrylaten, Acrylnitril, Acrylamid, Hydroxyalkylacrylaten, Hydroxyalkylmethacrylaten, Acrylsäure, Methacrylsäure sowie vinylaromatischen Kohlenwasserstoffen wie Styrol, alpha-Methylstyrol, Vinyltoluol.
   c) 0,05 bes 8 Gewichtsteile wenigstens eines vernetzenden Monomeren und
   d) 0,05 bis 6 Gewichtsteile wenigstens eines Pfropfmonomeren und
   C - einen dritten nichtelastomeren, relativ harten, Bereich mit einer Glasübergangstemperatur von größer 25°C, der in Gegenwart der Produkte aus der ersten und zweiten Phase polymerisiert wurde, ausgehend von einer Monomerenmischung, die auf 100 Gewichtsteile enthält:
   a) 85 bis 99,9 Gewichtsteile wenigstens eines Hauptmonomeren, ausgewählt aus Alkylmethacrylaten, deren Alkylgruppen 1 bis 4 Kohlenstoffatome besitzen und vinylaromatischen Kohlenwasserstoffen,
   b) 0,1 bis 10 Gewichtsteile wenigstens eines monoethylenisch ungesättigten Monomeren, das mit dem genannten Hauptmonomeren copolymerisierbar ist, ausgewählt aus Acrylmonomeren wie Alkylacrylaten, deren Alkylgruppen 1 bis 8 Kohlenstoffatome besitzen, Alkoxyacrylaten, Cyanoethylacrylaten, Acrylnitril, Acrylamid, Hydroxyalkylacrylaten, Hydroxyalkylmethacrylaten, Acrylsäure und Methacrylsäure
   c) 0 bis 5 Gewichtsteile wenigstens einer Reglersubstanz,
   wobei die Bereiche (A), (B) und (C), auf 100 Gewichtsteile des genannten Polymerverbundwerkstoffs, entsprechend 3 bis 80 Gewichtsteile, 10 bis 60 Gewichtsteile und 10 bis 60 Gewichtsteile ausmachen.

2. Polymerverbundwerkstoff nach Anspruch 1, dadurch gekennzeichnet, daß beim Vorliegen seiner Teilchen in Pulverform, der Durchmesser dieser Teilchen im Bereich von 40 bis 500 nm liegt.

3. Polymerverbundwerkstoff nach einem der Ansprüche 1 und 2, dadurch gekennzeichnet, daß das vernetzende Monomere (c) des Bereichs (B) ausgewählt wird aus Polymethacrylaten und Polyacrylaten von Polyolen, Polyvinylbenzolen und Vinylacrylat und -methacrylat.

4. Polymerverbundwerkstoff nach einem der Ansprüche 1 bis 3, dadurch gekennzeichnet, daß das Pfropfmonomere (d) des Bereichs (B) ausgewählt wird aus Allyl-, Methallyl- oder Crotylestern von alpha, beta-ungesättigten Mono- oder Dicarbonsäuren, Allylether, Methallylether und Vinyl- und Crotylether, Allylthioether, Methallylthioether und Crotyl-und Vinylthioether, N-Allyl-, Methallyl- oder Crotylmaleimid, Vinylestern der 3-Buten- und 4-Pentensäure, Triallylcyanurat, O-Allyl-, Methallyl- oder Crotyl-O-alkyl-, Aryl-, Alkaryl- oder Aralkyl- P-vinyl-, Allyl- oder Methallylphosphonat, Triallyl-, Trimethallyl- oder Tricrotylphosphat, O-Vinyl-, O,O-Diallyl-, Dimethallyl- oder Dicrotylphosphat, Cycloalkenestern der Acrylsäure, Methacrylsäure, Maleinsäure, Fumarsäure, Itakonsäure, (2,2,1)-Bicyclo-5-hept-2-enylestern der Acrylsäure, Methacrylsäure, Maleinsäure, Fumarsäure und Itakonsäure, Vinylethern und Vinylthioethern von Cycloalkenolen und Cycloalkenthiolen und Vinylestern von Cycloalkencarbonsäuren.

**5.** Polymerverbundwerkstoffnach einem der Ansprüche 1 bis 4, dadurch gekennzeichnet, daß die Reglersubstanzen (c) des Bereichs (C) ausgewählt werden aus Mercaptanen, Polymercaptanen, polyhalogenierten Verbindungen, zweifach ungesättigten Monoterpenen und einfach ungesättigten Diterpenen.

**6.** Polymerverbundwerkstoff gemäß einem der Ansprüche 1 bis 5, dadurch gekennzeichnet, daß er in Form eines 20 bis 50 gewichtsprozentigen wässrigen Latex erhalten wird.

**7.** Polymerverbundwerkstoff gemäß einem der Ansprüche 1 bis 5, dadurch gekennzeichnet, daß er in Form einem Pulvers erhalten wird.

**8.** Verfahren zur Herstellung eines Polymerverbundwerkstoffs nach einem der Ansprüche 1 bis 6, dadurch gekennzeichnet, daß er gemäß den folgenden Stufen hergestellt wird:
- Bildung des Polymeren des ersten Bereichs (A) durch (Co)Polymerisation der Monomeren (a) und gegebenenfalls (b)
- Hinzufügen der Monomermischung für den zweiten Bereich (B) und deren (Co)polymerisation, um Stadium (B) zu erreichen und
- Hinzufügen der Monomermischung für den dritten Bereich (C) und deren (Co)polymerisation, um Stadium (C) zu erreichen,

wobei jede Etappe der Polymerisation in einer wässrigen Emulsion, in Gegenwart eines Radikalinitiators und eines Emulgators, durchgeführt wird und das nach diesen drei Etappen erhaltene Produkt einen Latex darstellt.

**9.** Thermoplastische Zusammensetzung, bestehend aus einer Mischung, die auf 100 Gewichtsteile enthält:
- 10 bis 99 Gewichtsteile eines festen, thermoplastischen Polymeren aus wenigsten einem der Monomeren, ausgewählt aus Alkylmethacrylaten, deren Alkylgruppen 1 bis 4 Kohlenstoffatome enthalten und vinylaromatischen Kohlenwasserstoffen oder ein Polymeres mit mehr als 50 Gewichtsprozent aus wenigstens einem dieser Monomeren und wenigstens einem anderen monoethylenisch ungesättigten, copolymerisierbaren Monomeren und
- 90 bis 1 Gewichtsteile des Polymerverbundwerkstoffs nach einem der Ansprüche 1 bis 7.

**10.** Thermoplastische Zusammensetzung nach Anspruch 9, dadurch gekennzeichnet, daß die Kombination der Bereiche (A) und (B) des Polymerverbundwerkstoffs 18 bis 40 Gewichtsprozent der gesamten thermoplastischen Mischung ausmacht.

**11.** Alle geformten Gegenstände, die sich mittels der thermoplastischen Zusammensetzung nach einem der Ansprüche 9 und 10 herstellen lassen.